# EUROPEAN PATENT APPLICATION

(11) **EP 4 134 261 A1**
(43) Date of publication of application: **15.02.2023**
(21) Application number: 21216718.3
(22) Date of filing: 22.12.2021
(51) Int. Cl.: B60L 15/00, B60L 50/64, B60L 58/12, B62M 6/45, B62M 6/90, H01M 10/42

(54) **INTELLIGENT ENERGY MODULE OF ELECTRICALLY ASSISTED BICYCLE**

(30) Priority: 10.08.2021 TW 110129510
(71) Applicant: Hyena Inc., Taichung City 408 (TW)
(72) Inventor: CHEN, Po-Han, 408 TAICHUNG CITY (TW)
(74) Representative: Deambrogi, Edgardo

(57) **Abstract**

An intelligent energy module of an electrically assisted bicycle includes a battery management system, a controller and a motor. The battery management system includes a battery and an analog front end. The analog front end is electrically connected to the battery assembly. The controller includes a micro controller unit and a driver. The micro controller unit is electrically connected to the analog front end. The driver electrically connected to the micro controller unit. The motor is electrically connected to the driver and controlled by the driver. The battery assembly, the analog front end, the micro controller unit and the driver are disposed on a same circuit board.

## Description

### BACKGROUND

### Technical Field

The present disclosure relates to an intelligent energy module. More particularly, the present disclosure relates to an intelligent energy module of an electrically assisted bicycle.

### Description of Related Art

Nowadays, electrical components are widely used in an application of an electrically assisted bicycle, such as a battery management system, a controller and a motor. In the conventional structure, the battery management system and the controller are disposed on two different circuit boards, respectively, and the battery management system is connected to the controller for communicating and transmitting signal, thus controlling the motor. The circuit complexity of the aforementioned structure is high, and the connection between the battery management system and the controller has to be implemented by a lot of external physical wiring, thus, the assembly time and cost of the electric system increase substantially. Moreover, when the battery management system and the controller communicate and transmit signals, a problem of compatibility usually exists. Therefore, the battery management system and the controller require compatibility matching before communicating and transmitting. Thus, developing an intelligent energy module of an electrically assisted bicycle with reducing the external physical wiring, assembly time and cost of the electric system is commercially desirable.

### Summary

According to one aspect of the present disclosure, an intelligent energy module of an electrically assisted bicycle includes a battery management system, a controller and a motor. The battery management system includes a battery assembly and an analog front end. The analog front end is electrically connected to the battery assembly. The controller includes a micro controller unit and a driver. The micro controller unit is electrically connected to the analog front end. The driver is electrically connected to the micro controller unit. The motor is electrically connected to the driver and controlled by the driver. The battery assembly, the analog front end, the micro controller unit and the driver are disposed on a same circuit board.

According to one embodiment, the micro controller unit is directly and electrically connected between the analog front end and the driver to enable the micro controller unit to control the battery assembly and the motor via the analog front end and the driver, respectively.

According to one embodiment, the intelligent energy module of the electrically assisted bicycle further includes a charge/discharge switching module. The charge/discharge switching module is disposed on the same circuit board, and electrically connected to the battery assembly and the analog front end. The analog front end detects the battery assembly to obtain a battery power level and transmits the battery power level to the micro controller unit; the micro controller unit generates a charge/discharge signal according to the battery power level and transmits the charge/discharge signal to the analog front end, and the analog front end provides one of a charge enable signal and a discharge enable signal to the charge/discharge switching module according to the charge/discharge signal to enable the micro controller unit to control the battery assembly via the analog front end.

According to one embodiment, the charge/discharge switching module includes a charge switching element and a discharge switching element. The charge switching element is electrically connected to the battery assembly and the analog front end. The charge switching element is controlled by the charge enable signal. The discharge switching element is electrically connected to the charge switching element, the analog front end and the controller. The discharge switching element is controlled by the discharge enable signal. When the charge/discharge switching module receives the charge enable signal of the analog front end, the charge switching element is turned on to charge the battery assembly. When the charge/discharge switching module receives the discharge enable signal of the analog front end, the discharge switching element is turned on to discharge from the battery assembly to the controller.

According to one embodiment, the intelligent energy module of the electrically assisted bicycle further includes a driving switching module. The driving switching module is disposed on the same circuit board and electrically connected to the driver, the motor and the charge/discharge switching module, wherein the micro controller unit controls the motor via the driver and the driving switching module.

According to one embodiment, the driving switching module includes a plurality of driving switching elements. The driving switching elements are electrically connected between the driver and the motor. When the charge/discharge switching module receives the discharge enable signal, the driver is controlled by the micro controller unit to generate a plurality of switching signals, and each of the driving switching elements is turned on or off according to each of the switching signals.

According to one embodiment, the intelligent energy module of the electrically assisted bicycle further includes a charge switching element and a driving switching module. The charge switching element is disposed on the same circuit board and electrically connected to the battery assembly, the analog front end and the controller. The driving switching module is disposed on the same circuit board and electrically connected to the driver, the motor and the charge switching element. The analog front end is electrically connected to the driver; the analog front end detects the battery assembly to obtain a battery power level and transmits the battery power level to the micro controller unit; the micro controller unit generates a charge/discharge signal according to the battery power level and transmits the charge/discharge signal to the analog front end, and the analog front end generates one of a charge enable signal and a discharge enable signal according to the charge/discharge signal. When the analog front end generates the charge enable signal, the analog front end transmits the charge enable signal to the charge switching element, and the charge switching element is turned on to charge the battery assembly. When the analog front end generates the discharge enable signal, the analog front end transmits the discharge enable signal to the driver, and the driver controls the driving switching module according to the discharge enable signal to enable the battery assembly to discharge to the controller.

According to one embodiment, the battery management system further includes another micro controller unit. The another micro controller unit is electrically connected between the analog front end and the micro controller unit of the controller, and disposed on the same circuit board. The another micro controller unit is configured to control the analog front end.

According to one embodiment, the intelligent energy module of the electrically assisted bicycle further includes a charge/discharge switching module. The charge/discharge switching module is disposed on the same circuit board and electrically connected to the battery assembly and the analog front end. The analog front end detects the battery assembly to obtain a battery power level and transmits the battery power level to the another micro controller unit; the another micro controller unit generates a charge/discharge signal according to the battery power level and transmits the charge/discharge signal to the analog front end, and the analog front end provides one of a charge enable signal and a discharge enable signal to the charge/discharge switching module according to the charge/discharge signal to enable the another micro controller unit to control the battery assembly via the analog front end.

According to one embodiment, the intelligent energy module of the electrically assisted bicycle further includes a charge switching element and a driving switching module. The charge switching element is disposed on the same circuit board and electrically connected to the battery assembly, the analog front end and the controller. The driving switching module is disposed on the same circuit board and electrically connected to the driver, the motor and the charge switching element. The analog front end is electrically connected to the driver; the analog front end detects the battery assembly to obtain a battery power level and transmits the battery power level to the another micro controller unit; the another micro controller unit generates a charge/discharge signal according to the battery power level and transmits the charge/discharge signal to the analog front end, and the analog front end generates one of a charge enable signal and a discharge enable signal according to the charge/discharge signal. When the analog front end generates the charge enable signal, the analog front end transmits the charge enable signal to the charge switching element, and the charge switching element is turned on to charge the battery assembly. When the analog front end generates the discharge enable signal, the analog front end transmits the discharge enable signal to the driver, and the driver controls the driving switching module according to the discharge enable signal to enable the battery assembly to discharge to the controller.

### Brief description of the drawings

The present disclosure can be more fully understood by reading the following detailed description of the embodiment, with reference made to the accompanying drawings as follows:
Fig. 1 shows a schematic view of an intelligent energy module of an electrically assisted bicycle according to a first embodiment of the present disclosure.
Fig. 2 shows a schematic view of an intelligent energy module of an electrically assisted bicycle according to a second embodiment of the present disclosure.
Fig. 3 shows a schematic view of an intelligent energy module of an electrically assisted bicycle according to a third embodiment of the present disclosure.
Fig. 4 shows a schematic view of an intelligent energy module of an electrically assisted bicycle according to a fourth embodiment of the present disclosure.
Fig. 5 shows a schematic view of an intelligent energy module of an electrically assisted bicycle according to a fifth embodiment of the present disclosure.

### Detailed description

The embodiment will be described with the drawings. For clarity, some practical details will be described below. However, it should be noted that the present disclosure should not be limited by the practical details, that is, in some embodiment, the practical details is unnecessary. In addition, for simplifying the drawings, some conventional structures and elements will be simply illustrated, and repeated elements may be represented by the same labels.

It will be understood that when an element (or device) is referred to as be "connected to" another element, it can be directly connected to other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, these elements or components should not be limited by these terms. Consequently, a first element or component discussed below could be termed a second element or component.

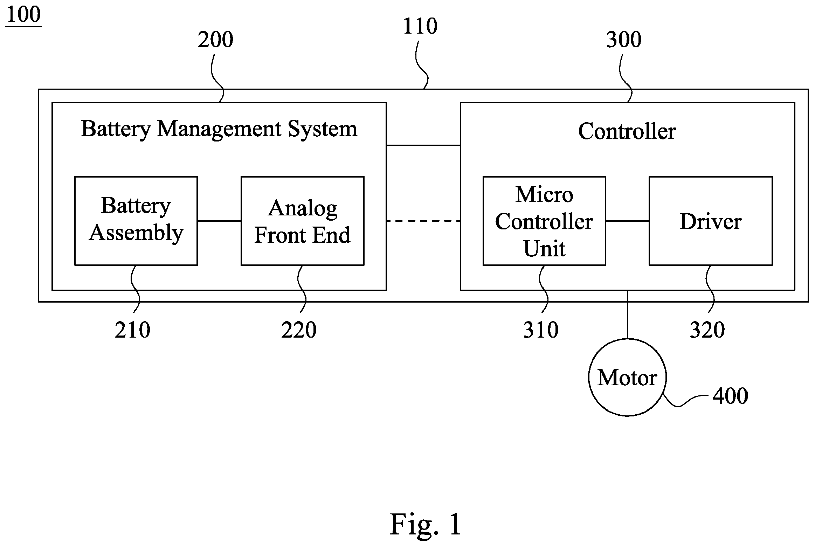

Please refer to Fig. 1. Fig. 1 shows a schematic view of an intelligent energy module 100 of an electrically assisted bicycle according to a first embodiment of the present disclosure. The intelligent energy module 100 of the electrically assisted bicycle includes a battery management system 200, a controller 300 and a motor 400. The battery management system 200 includes a battery assembly 210 and an analog front end 220. The analog front end 220 is electrically connected to the battery assembly 210. The controller 300 includes a micro controller unit 310 and a driver 320. The micro controller unit 310 is electrically connected to the analog front end 220. The driver 320 is electrically connected to the micro controller unit 310. The motor 400 is electrically connected to the driver 320 and controlled by the driver 320. The battery assembly 210, the analog front end 220, the micro controller unit 310 and the driver 320 are disposed on a same circuit board 110. Thus, since the controller 300 and the battery management system 200 of the intelligent energy module 100 of the electrically assisted bicycle of the present disclosure are connected via a circuit, pins, cables, terminals or an improved way such as a flexible circuit board, all the components of the controller 300 and the battery management system 200 may be disposed on the same circuit board 110, thereby not only reducing the additional physical wiring, but also reducing the time and cost of assembling an electric system on the electrically assisted bicycle. Each of the structure of the intelligent energy module 100 of the electrically assisted bicycle is described in more detail below.

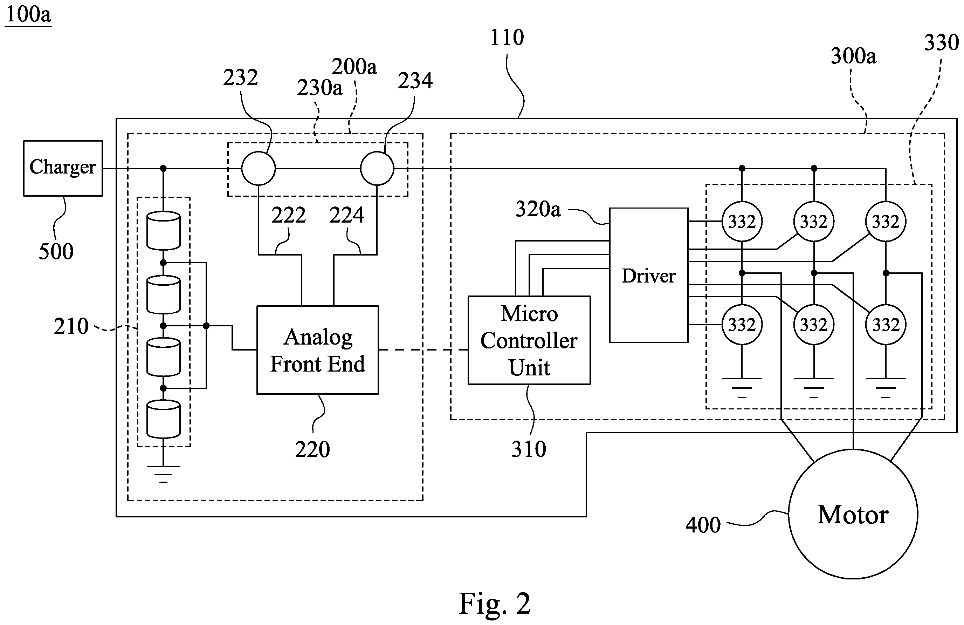

Please refer to Fig. 2. Fig. 2 shows a schematic view of an intelligent energy module 100a of an electrically assisted bicycle according to a second embodiment of the present disclosure. The intelligent energy module 100a of an electrically assisted bicycle includes a battery management system 200a, a controller 300a, a motor 400 and a charger 500.

The battery management system 200a is connected between the controller 300a and the charger 500, and disposed on the same circuit board 110. The battery management system 200a includes a battery assembly 210, an analog front end 220 and a charge/discharge switching module 230a. The battery assembly 210 is electrically connected to the analog front end 220 and the charger 500. The charge/discharge switching module 230a is electrically connected to the battery assembly 210 and the analog front end 220. In detail, the battery assembly 210 includes a plurality of battery cells, and the battery cells are serially connected to each other. The analog front end 220 detects the battery assembly 210 to obtain a battery power level and transmits the battery power level to the micro controller unit 310 of the controller 300a. The micro controller unit 310 generates a charge/discharge signal according to the battery power level and transmits the charge/discharge signal to the analog front end 220. The analog front end 220 provides one of a charge enable signal 222 and a discharge enable signal 224 to the charge/discharge switching module 230a according to the charge/discharge signal to enable the micro controller unit 310 to control the battery assembly 210 via the analog front end 220. Moreover, the charge/discharge switching module 230a includes a charge switching element 232 and a discharge switching element 234. The charge switching element 232 is electrically connected to the battery assembly 210, the analog front end 220 and the charger 500, and the charge switching element 232 is controlled by the charge enable signal 222. The discharge switching element 234 is electrically connected to the charge switching element 232, the analog front end 220 and the controller 300a, and the discharge switching element 234 is controlled by the discharge enable signal 224. When the charge/discharge switching module 230a receives the charge enable signal 222 of the analog front end 220, the charge switching element 232 is turned on to charge the battery assembly 210; otherwise, when the charge/discharge switching module 230a receives the discharge enable signal 224 of the analog front end 220, the discharge switching element 234 is turned on to discharge from the battery assembly 210 to the controller 300a. In an embodiment of the present disclosure, the charge switching element 232 and the discharge switching element 234 can be implemented by a metal oxide semiconductor field effect transistor (MOSFET), but the present disclosure is not limited thereto.

The controller 300a is disposed on the same circuit board 110, and includes a micro controller unit 310, a driver 320a and a driving switching module 330. The micro controller unit 310 is electrically connected to the analog front end 220. The driver 320a is electrically connected to the micro controller unit 310. The driving switching module 330 is electrically connected to the driver 320a, the motor 400 and the charge/discharge switching module 230a. The micro controller unit 310 controls the motor 400 via the driver 320a and the driving switching module 330. The driving switching module 330 includes a plurality of driving switching elements 332. The driving switching elements 332 are electrically connected between the driver 320a and the motor 400. When the charge/discharge switching module 230a receives the discharge enable signal 224, the driver 320a is controlled by the micro controller unit 310 to generate a plurality of switching signals, and each of the driving switching elements 332 is turned on or off according to each of the switching signals. In an embodiment of the present disclosure, a number of the driving switching elements 332 is six, and the driving switching elements 332 are implemented by the MOSFET. The micro controller unit 310 transmits signal to the analog front end 220 via a communication interface, and the communication interface can be a controller area network bus (CAN Bus), a universal asynchronous receiver/transmitter (UART), a serial peripheral interface (SPI) or an inter-integrated circuit (I2C), but the present disclosure is not limited thereto.

The motor 400 is electrically connected to the driver 320a and is controlled by the driver 320a. The motor 400 is electrically connected to the driving switching elements 332 of the driving switching module 330 to enable the micro controller unit 310 to control the motor 400 via the driver 320a and the driving switching module 330.

The charger 500 is electrically connected to the battery assembly 210 and the charge switching element 232 of the charge/discharge switching module 230a. When the charge/discharge switching module 230a receives the charge enable signal 222 of the analog front end 220, the charge switching element 232 is turned on to enable the charger 500 to charge the battery assembly 210.

As mentioned above, the micro controller unit 310 is directly and electrically connected between the analog front end 220 and the driver 320a to enable the micro controller unit 310 to control the battery assembly 210 and the motor 400 via the analog front end 220 and the driver 320a, respectively. Thus, since the controller 300a and the battery management system 200a of the intelligent energy module 100a of the electrically assisted bicycle of the present disclosure are connected via a circuit, pins, cables, terminals or an improved way such as a flexible circuit board, all the components of the controller 300a and the battery management system 200a may be disposed on the same circuit board 110, thereby not only reducing the additional physical wiring, but also reducing the time and cost of assembling an electric system on the electrically assisted bicycle. In other words, the intelligent energy module 100a of the electrically assisted bicycle of the present disclosure can avoid the increase of the circuit complexity and the external physical wiring which are caused by disposing a conventional controller and a conventional battery management system disposed on two different circuit boards, respectively. Moreover, the intelligent energy module 100a of the electrically assisted bicycle of the present disclosure only needs one integrated micro controller unit 310 to control the battery management system 200a and other components of the controller 300a, thereby not only reducing circuit complexity of two micro controller units in the conventional technique, but also solving the problem of the conventional technique that the use of the two micro controller units requires compatibility matching and greatly reducing the manufacturing cost at the same time.

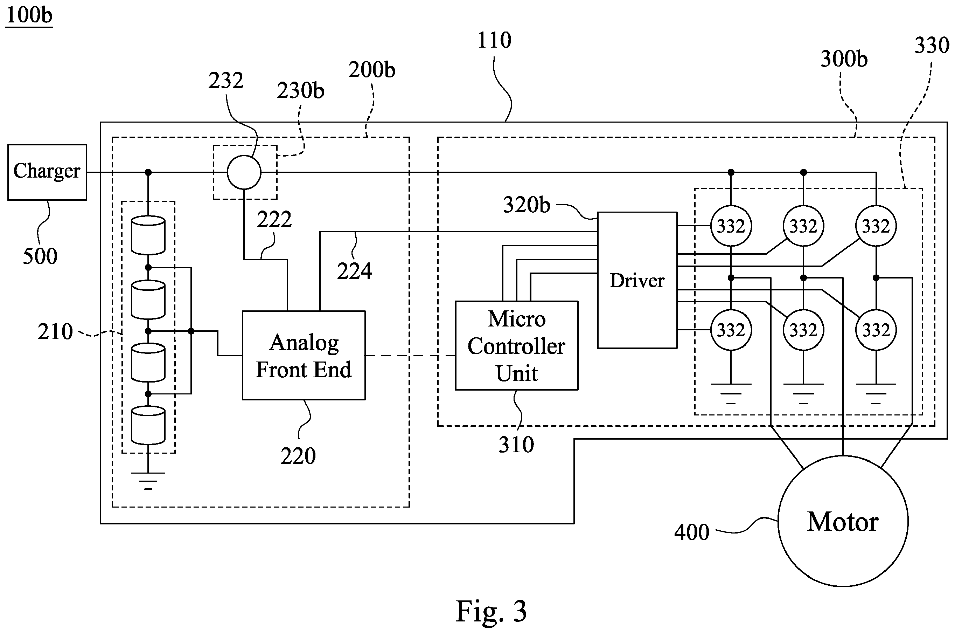

Please refer to Fig. 2 and Fig. 3. Fig. 3 shows a schematic view of an intelligent energy module 100b of an electrically assisted bicycle according to a third embodiment of the present disclosure. The intelligent energy module 100b of the electrically assisted bicycle includes a battery management system 200b, the controller 300b, the motor 400 and the charger 500.

The battery management system 200b is disposed on a same circuit board 110 and includes a battery assembly 210, an analog front end 220 and a charge/discharge switching module 230b. The battery assembly 210 and the analog front end 220 are the same as the battery assembly 210 and the analog front end 220 in Fig.2, respectively, and will not be described again. The charge/discharge switching module 230b only includes a charge switching element 232. The charge switching element 232 is electrically connected to the battery assembly 210, the analog front end 220, the controller 300b and the charger 500. The charge switching element 232 is controlled by the charge enable signal 222. When the charge switching element 232 of the charge/discharge switching element 230b receives the charge enable signal 222 of the analog front end 220, the charge switching element 232 is turned on to charge the battery assembly 210.

The controller 300b is disposed on the same circuit board 110 and includes a micro controller unit 310, a driver 320b and a driving switching module 330. The micro controller unit 310 and the driving switching module 330 are the same as the micro controller unit 310 and the driving switching module 330 in Fig. 2, respectively, and will not be described again. The driver 320b is electrically connected to the micro controller unit 310 and the analog front end 220. The analog front end 220 detects the battery assembly 210 to obtain a battery power level and transmits the battery power level to the micro controller unit 310. The micro controller unit 310 generates a charge/discharge signal according to the battery power level and transmits the charge/discharge signal to the analog front end 220. The analog front end 220 generates one of a charge enable signal 222 and a discharge enable signal 224 according to the charge/discharge signal. When the analog front end 220 generates the charge enable signal 222, the analog front end 220 transmits the charge enable signal 222 to the charge switching element 232, and the charge switching element 232 is turned on to charge the battery assembly 210; otherwise, when the analog front end 220 generates the discharge enable signal 224, the analog front end 220 transmits the discharge enable signal 224 to the driver 320b, and the driver 320b controls the driving switching module 330 according to the discharge enable signal 224 to enable the battery assembly 210 to discharge to the controller 300b.

The motor 400 and the charger 500 are the same as the motor 400 and the charger 500 in Fig. 2, respectively, and will not be described again. Thus, since the controller 300b and the battery management system 200b of the intelligent energy module 100b of the present disclosure are connected via a circuit, pins, cables, terminals or an improved way such as a flexible circuit board, all the components of the controller 300b and the battery management system 200b may be disposed on the same circuit board 110, thereby not only reducing the additional physical wiring, but also reducing the time and cost of assembling an electric system on the electrically assisted bicycle. In other words, the intelligent energy module 100b of the electrically assisted bicycle of the present disclosure can avoid the increase of the circuit complexity and the external physical wiring which are caused by disposing a conventional controller and a battery management system disposed on two different circuit boards, respectively. Moreover, the intelligent energy module 100b of the electrically assisted bicycle of the present disclosure only needs one integrated micro controller unit 310 to control the battery management system 200b and other components of the controller 300b, thereby not only reducing circuit complexity of two micro controller units in the conventional technique, but also solving the problem of the conventional technique that the use of the two micro controller units requires compatibility matching and greatly reducing the manufacturing cost at the same time.

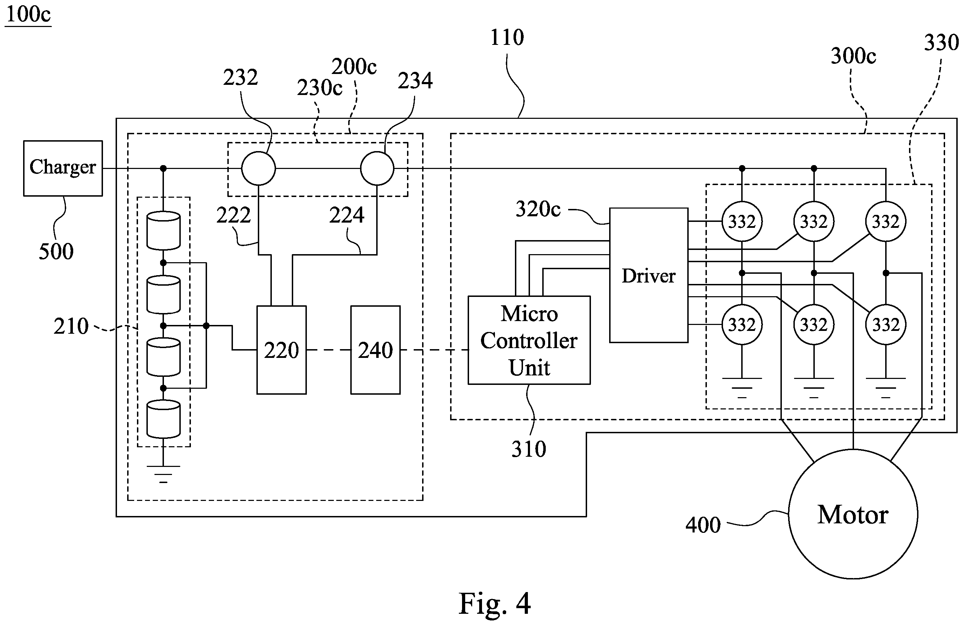

Please refer to Figs. 2 and 4. Fig. 4 shows a schematic view of an intelligent energy module 100c of an electrically assisted bicycle according to a fourth embodiment of the present disclosure. The intelligent energy module 100c of the electrically assisted bicycle includes a battery management system 200c, a controller 300c, a motor 400 and a charger 500.

The battery management system 200c is disposed on a same circuit board 110 and includes a battery assembly 210, an analog front end 220, a charge/discharge switching module 230c and another micro controller unit 240. The controller 300c is disposed on the same circuit board 110 and includes a micro controller unit 310, a driver 320c and a driving switching module 330. The battery assembly 210, the analog front end 220, the charge/discharge switching module 230c, the controller 300c, the motor 400 and the charger 500 in Fig. 4 are the same as the battery assembly 210, the analog front end 220, the charge/discharge switching module 230a, the controller 300a, the motor 400 and the charger 500 in Fig. 2, respectively, and will not be described again. Furthermore, the battery management system 200c further includes another micro controller unit 240, the another micro controller unit 240 is electrically connected between the analog front end 220 and the micro controller unit 310 of the controller 300c, and disposed on the same circuit board 110. The another micro controller unit 240 is configured to control the analog front end 220. In detail, the analog front end 220 detects the battery assembly 210 to obtain a battery power level and transmits the battery power level to the another micro controller unit 240. The another micro controller unit 240 generates a charge/discharge signal according to the battery power level and transmits the charge/discharge signal to the analog front end 220, and the analog front end 220 provides one of a charge enable signal 222 and a discharge enable signal 224 to the charge/discharge switching module 230c according to the charge/discharge signal to enable the another micro controller unit 240 to control the battery assembly 210 via the analog front end 220. Thus, under a condition that the controller 300c and the battery management system 200c include the micro controller units 310 and 240, respectively, since the controller 300c and the battery management system 200c of the intelligent energy module 100c of the electrically assisted bicycle of the present disclosure are connected via a circuit, pins, cables, terminals or an improved way such as a flexible circuit board, all the components of the controller 300c and the battery management system 200c may be disposed on the same circuit board 110, thereby not only reducing external physical wiring, but also reducing the time and cost of assembling an electric system, and then avoids the increase of the circuit complexity and the external physical wiring which are caused by disposing a conventional controller and a conventional battery management system on two different circuit boards, respectively.

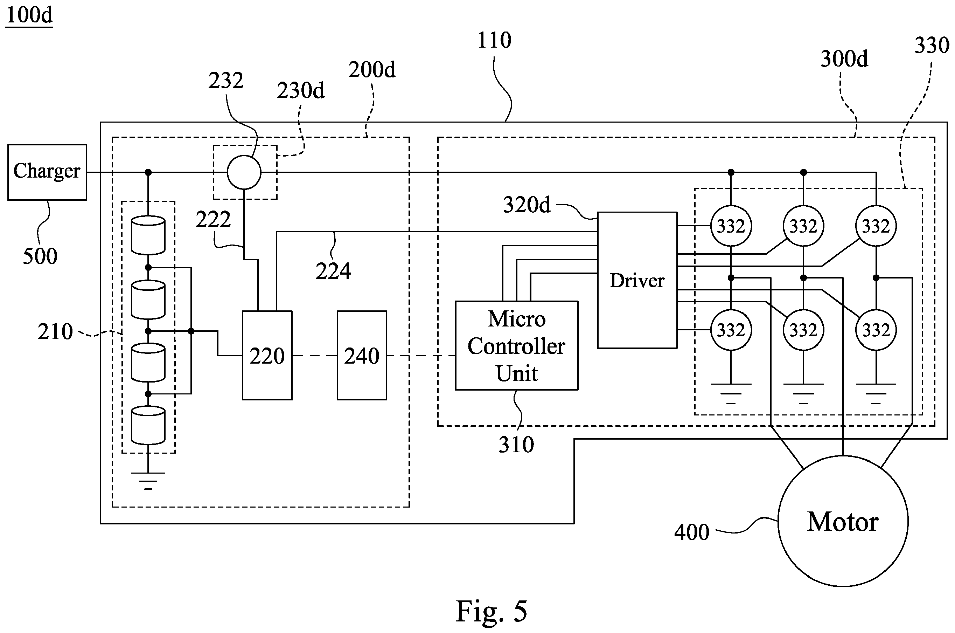

Please refer to Fig. 3, Fig. 4 and Fig. 5. Fig. 5 shows a schematic view of an intelligent energy module 100d of an electrically assisted bicycle according to a fifth embodiment of the present disclosure. The intelligent energy module 100d of the electrically assisted bicycle includes a battery management system 200d, a controller 300d, a motor 400 and a charger 500.

The battery management system 200d is disposed on a same circuit board 110 and includes a battery assembly 210, an analog front end 220, a charge/discharge switching module 230d and another micro controller unit 240. The controller 300d is disposed on the same circuit board 110 and includes a micro controller unit 310, a driver 320d and a driving switching module 330. The battery assembly 210, the analog front end 220, the charge/discharge switching module 230d, the controller 300d, the motor 400 and the charger 500 in Fig. 5 are the same as the battery assembly 210, the analog front end 220, the charge/discharge switching module 230b, the controller 300b, the motor 400 and the charger 500 in Fig. 3, respectively, and will not be described again. The another micro controller unit 240 of the battery management system 200d in Fig. 5 is the same as the another micro controller unit 240 of the battery management system 200c in Fig. 4, and will not be described again. Thus, under a condition that the controller 300d and the battery management system 200d include the micro controller units 310 and 240, respectively, since the controller 300d and the battery management system 200d of the intelligent energy module 100d of the electrically assisted bicycle of the present disclosure are connected via a circuit, pins, cables, terminals or an improved way such as a flexible circuit board, all the components of the controller 300d and the battery management system 200d may be disposed on the same circuit board 110, thereby not only reducing external physical wiring, but also reducing the time and cost of assembling an electric system, and then avoids the increase of the circuit complexity and the external physical wiring which are caused by disposing a conventional controller and a conventional battery management system on two different circuit boards, respectively.

In other embodiments of the aforementioned second embodiment, third embodiment, fourth embodiment and fifth embodiment, the battery assembly 210 can charge and discharge without the micro controller unit 310, the analog front end 220 can generate the charge enable signal 222 or the discharge enable signal 224 according to the battery power level by itself. In detail, the analog front end 220 detects the battery assembly 210 to obtain a battery power level and generate one of the charge enable signal 222 and the discharge enable signal 224 according to the battery power level. Thus, the intelligent energy module of the electrically assisted bicycle of the present disclosure can greatly increase the control efficiency via the analog front end 220 having control capability.

According to the aforementioned embodiments and examples, the advantages of the present disclosure are described as follows.

1. Since the controller and the battery management system of the intelligent energy module of the electrically assisted bicycle are connected via a circuit, pins, cables, terminals or an improved way such as a flexible circuit board, all the components of the controller and the battery management system may be disposed on the same circuit board, thereby not only reducing the additional physical wiring, but also reducing the time and cost of assembling an electric system on the electrically assisted bicycle.

2. Under a condition that the controller and the battery management system include micro controller units, respectively, since the controller and the battery management system of the intelligent energy module of the electrically assisted bicycle are connected via an improved way such as a flexible circuit board, all the components of the controller and the battery management system may be disposed on the same circuit board, thereby reducing the circuit complexity and the external physical wiring.

3. The intelligent energy module of the electrically assisted bicycle of the present disclosure only needs one integrated micro controller unit to control the battery management system and other components of the controller, thereby not only reducing circuit complexity of two micro controller units in the conventional technique, but also solving the problem of the conventional technique that the use of the two micro controller units requires compatibility matching and greatly reducing the manufacturing cost at the same time.

4. The intelligent energy module of the electrically assisted bicycle of the present disclosure can greatly increase the control efficiency via the analog front end having controlling capability.

## Claims

1. An intelligent energy module (100) of an electrically assisted bicycle, comprising:
a battery management system (200), comprising:
a battery assembly (210); and
an analog front end (220) electrically connected to the battery assembly (210);
a controller (300), comprising:
a micro controller unit (310) electrically connected to the analog front end (220); and
a driver (320) electrically connected to the micro controller unit (310); and
a motor (400) electrically connected to the driver (320) and controlled by the driver (320);
wherein the battery assembly (210), the analog front end (220), the micro controller unit (310) and the driver (320) are disposed on a same circuit board (110).

2. The intelligent energy module (100a) of the electrically assisted bicycle of claim 1, wherein the micro controller unit (310) is directly and electrically connected between the analog front end (220) and the driver (320a) to enable the micro controller unit (310) to control the battery assembly (210) and the motor (400) via the analog front end (220) and the driver (320a), respectively.

3. The intelligent energy module (100a) of the electrically assisted bicycle of any of claims 1-2, further comprising:
a charge/discharge switching module (230a) disposed on the same circuit board (110), and electrically connected to the battery assembly (210) and the analog front end (220), wherein the analog front end (220) detects the battery assembly (210) to obtain a battery power level and transmits the battery power level to the micro controller unit (310); the micro controller unit (310) generates a charge/discharge signal according to the battery power level and transmits the charge/discharge signal to the analog front end (220), and the analog front end (220) provides one of a charge enable signal (222) and a discharge enable signal (224) to the charge/discharge switching module (230a) according to the charge/discharge signal to enable the micro controller unit (310) to control the battery assembly (210) via the analog front end (220).

4. The intelligent energy module (100a) of the electrically assisted bicycle of any of claims 1-3, wherein the charge/discharge switching module (230a) comprises:
a charge switching element (232) electrically connected to the battery assembly (210) and the analog front end (220), wherein the charge switching element (232) is controlled by the charge enable signal (222); and
a discharge switching element (234) electrically connected to the charge switching element (232), the analog front end (220) and the controller (300a), wherein the discharge switching element (234) is controlled by the discharge enable signal (224);
wherein when the charge/discharge switching module (230a) receives the charge enable signal (222) of the analog front end (220), the charge switching element (232) is turned on to charge the battery assembly (210);
wherein when the charge/discharge switching module (230a) receives the discharge enable signal (224) of the analog front end (220), the discharge switching element (234) is turned on to discharge from the battery assembly (210) to the controller (300a).

5. The intelligent energy module (100a) of the electrically assisted bicycle of any of claims 1-4, further comprising:
a driving switching module (330) disposed on the same circuit board (110) and electrically connected to the driver (320a), the motor (400) and the charge/discharge switching module (230a), wherein the micro controller unit (310) controls the motor (400) via the driver (320a) and the driving switching module (330).

6. The intelligent energy module (100a) of the electrically assisted bicycle of any of claims 1-5, wherein the driving switching module (330) comprises:
a plurality of driving switching elements (332) electrically connected between the driver (320a) and the motor (400);
wherein when the charge/discharge switching module (230a) receives the discharge enable signal (224), the driver (320a) is controlled by the micro controller unit (310) to generate a plurality of switching signals, and each of the driving switching elements (332) is turned on or off according to each of the switching signals.

7. The intelligent energy module (100b) of the electrically assisted bicycle of any of claims 1-6, further comprising:
a charge switching element (232) disposed on the same circuit board (110) and electrically connected to the battery assembly (210), the analog front end (220) and the controller (300b); and
a driving switching module (330) disposed on the same circuit board (110) and electrically connected to the driver (320b), the motor (400) and the charge switching element (232);
wherein the analog front end (220) is electrically connected to the driver (320b); the analog front end (220) detects the battery assembly (210) to obtain a battery power level and transmits the battery power level to the micro controller unit (310); the micro controller unit (310) generates a charge/discharge signal according to the battery power level and transmits the charge/discharge signal to the analog front end (220), and the analog front end (220) generates one of a charge enable signal (222) and a discharge enable signal (224) according to the charge/discharge signal;
wherein when the analog front end (220) generates the charge enable signal (222), the analog front end (220) transmits the charge enable signal (222) to the charge switching element (232), and the charge switching element (232) is turned on to charge the battery assembly (210);
wherein when the analog front end (220) generates the discharge enable signal (224), the analog front end (220) transmits the discharge enable signal (224) to the driver (320b), and the driver (320b) controls the driving switching module (330) according to the discharge enable signal (224) to enable the battery assembly (210) to discharge to the controller (300b).

8. The intelligent energy module (100c) of the electrically assisted bicycle of any of claims 1-7, wherein the battery management system (200c) further comprises:
another micro controller unit (240) electrically connected between the analog front end (220) and the micro controller unit (310) of the controller (300c), and disposed on the same circuit board (110), wherein the another micro controller unit (240) is configured to control the analog front end (220).

9. The intelligent energy module (100c) of the electrically assisted bicycle of any of claims 1-8, further comprising:
a charge/discharge switching module (230c) disposed on the same circuit board (110) and electrically connected to the battery assembly (210) and the analog front end (220), wherein the analog front end (220) detects the battery assembly (210) to obtain a battery power level and transmits the battery power level to the another micro controller unit (240); the another micro controller unit (240) generates a charge/discharge signal according to the battery power level and transmits the charge/discharge signal to the analog front end (220), and the analog front end (220) provides one of a charge enable signal (222) and a discharge enable signal (224) to the charge/discharge switching module (230c) according to the charge/discharge signal to enable the another micro controller unit (240) to control the battery assembly (210) via the analog front end (220).

10. The intelligent energy module (100d) of the electrically assisted bicycle of any of claims 1-9, further comprising:
a charge switching element (232) disposed on the same circuit board (110) and electrically connected to the battery assembly (210), the analog front end (220) and the controller (300d); and
a driving switching module (330) disposed on the same circuit board (110) and electrically connected to the driver (320d), the motor (400) and the charge switching element (232);
wherein the analog front end (220) is electrically connected to the driver (320d); the analog front end (220) detects the battery assembly (210) to obtain a battery power level and transmits the battery power level to the another micro controller unit (240); the another micro controller unit (240) generates a charge/discharge signal according to the battery power level and transmits the charge/discharge signal to the analog front end (220), and the analog front end (220) generates one of a charge enable signal (222) and a discharge enable signal (224) according to the charge/discharge signal;
wherein when the analog front end (220) generates the charge enable signal (222), the analog front end (220) transmits the charge enable signal (222) to the charge switching element (232), and the charge switching element (232) is turned on to charge the battery assembly (210);
wherein when the analog front end (220) generates the discharge enable signal (224), the analog front end (220) transmits the discharge enable signal (224) to the driver (320d), and the driver (320d) controls the driving switching module (330) according to the discharge enable signal (224) to enable the battery assembly (210) to discharge to the controller (300d).
